Europäisches Patentamt

European Patent Office

Office européen des brevets

(11) Veröffentlichungsnummer: **0 066 299**
A1

## (12) EUROPÄISCHE PATENTANMELDUNG

(21) Anmeldenummer: 82104839.4

(22) Anmeldetag: 02.06.82

(51) Int. Cl.³: **B 62 K 25/06**
F 16 F 9/50, F 16 F 9/34

(30) Priorität: 03.06.81 DE 8116389 U

(43) Veröffentlichungstag der Anmeldung:
08.12.82 Patentblatt 82/49

(84) Benannte Vertragsstaaten:
DE FR GB IT

(71) Anmelder: BAYERISCHE MOTOREN WERKE
Aktiengesellschaft
Postfach 40 02 40 Petuelring 130
D-8000 München 40(DE)

(72) Erfinder: Peres, Laszlo
Traunstrasse 2
D-8000 München 82(DE)

(74) Vertreter: Dexheimer, Rolf
Bayerische Motoren Werke Aktiengesellschaft Postfach
40 02 40 Petuelring 130 - AJ-31
D-8000 München 40(DE)

(54) Hydraulischer Teleskopstossdämpfer für ein Kraftfahrzeug.

(57) Aus zwei teleskopierbaren Zylindern bestehender Teleskopstoßdämpfer, dessen äußerer Zylinder über eine hohle Kolbenstange einen im inneren Zylinder angeordneten Kolben trägt. Am unteren Endabschnitt des inneren Zylinders ist ein zwischen zwei Anlageschultern axial verschiebbarer Dämpfungseinsatz eingesetzt, der an seiner der obenliegenden Anlageschulter zugewandten Anlagefläche vier nutartige Aufnehmungen aufweist. Durch diese strömt beim Einfedern des Teleskopstoßdämpfers Hydrauliköl, so daß dieser relativ weich einfedert und härter ausfedert.

Fig. 1

- 1 -

## Hydraulischer Teleskopstoßdämpfer für ein Kraftfahrzeug

Die Neuerung geht aus von einem hydraulischen Teleskopstoßdämpfer der im Oberbegriff des Anspruchs 1 angegebenen
und durch die US-PS 3 810 659 bekanntgewordenen Art.

Bei den bekannten hydraulichen Teleskopstoßdämpfer befindet sich zwischen der untenliegenden Anlageschulter und
dem Dämpfungseinsatz eine Druckfeder, die diesen in Ruhelage sowie in der Druckstufe des Teleskopstoßdämpfers
gegen die obenliegende, dem Kolben zugewandte Anlageschulter drückt. Zwischen den beiden Anlageschultern ist
eine Führungsbuchse eingesetzt, längs deren Innenwandung
bei Axialbewegungen des Dämpfungseinsatzes mehrere radial
von diesem abstehende Zentrierstifte gleiten. Nachdem der
Dämpfungseinsatz in der Druckstufe des Teleskopstoßdämpfers an der obenliegenden Anlageschulter anliegt, kann das
hierbei vom Arbeitsraum des äußeren Zylinders in den oberen Arbeitsraum strömende Hydrauliköl, der sich zwischen
dem Kolben und einem Trennkolben befindet - außer über den
Hohlraum der Kolbenstange - nur über den zwischen dem
Dämpfungseinsatz und der Kolbenstange vorgesehenen Ringspalt fließen. Dies hat den Nachteil, daß wenn das Motorrad eine Fahrbahnerhöhung überfährt - wobei der äußere Zylinder in der Druckstufe verschoben wird - der Teleskopstoßdämpfer nur um ein relativ geringes Maß und damit sehr
hart einfedert, was den Fahrkomfort erheblich vermindert.
In der Zugstufe entsteht dagegen zwischen der obenlie-

- 2 -

genden Anlageschulter und dem Dämpfungseinsatz durch dessen Einfederung ein Ringkanal, über den das Hydrauliköl
- zusätzlich zu dem zwischen der Kolbenstange und dem
Dämpfungseinsatz ausgebildeten Ringspalt - vom oberen Arbeitsraum in den Arbeitsraum des äußeren Zylinders strömt,
wodurch der hydraulische Teleskopstoßdämpfer in der Zugstufe wesentlich weicher als in der Druckstufe federt.

Aufgabe der Neuerung ist es daher, einen hydraulischen
Teleskopstoßdämpfer der eingangs genannten Gattung auf
möglichst einfache Weise so auszubilden, daß er speziell
in der Druckstufe eine weiche Federung hat.

Zur Lösung der Aufgabe sind die im kennzeichnenden Teil
des Anspruchs 1 angegebenen Gestaltungsmerkmale vorgesehen.

Da die Ausnehmungen am Dämpfungseinsatz in einfacher Weise
vorgesehen werden können, ist neuerungsgemäß neben der
Vermeidung der Nachteile des Standes der Technik ein
preisgünstig herstellbarer, aus lediglich einem einzigen
Teil bestehender Dämpfungseinsatz geschaffen, der auch im
Betriebseinsatz kaum störanfällig ist.

Nachdem der Dämpfungseinsatz gemäß dem Merkmal des Schutzanspruchs 4 aus Kunststoff besteht, können die an ihm ausgebildeten Ausnehmungen - wie in den Schutzansprüchen 2
und 3 dargelegt - vorteilhafterweise problemlos beim
Spritzgießen des Dämpfungseinsatzes vorgesehen werden.
Ferner verursacht ein aus Kunststoff gefertigter Dämpfungseinsatz im Betriebseinsatz des Teleskopstoßdämpfers
kaum Klappergeräusche.

Eine weitere Ausgestaltung der Neuerung besteht darin, daß
der von der Kolbenstange unter Bildung eines Ringspalts
durchsetzte Dämpfungseinsatz auch in Bezug zur Wandung des inneren Zylinders einen Ringspalt hat.

Ein Ausführungsbeispiel der Neuerung ist in der Zeichnung dargestellt. Es zeigt:

Fig. 1     einen Längsschnitt durch den neuerungsgemäßen
           hydraulischen Teleskopstoßdämpfer,

Fig. 2     einen Schnitt längs Linie II-II in Fig. 1.

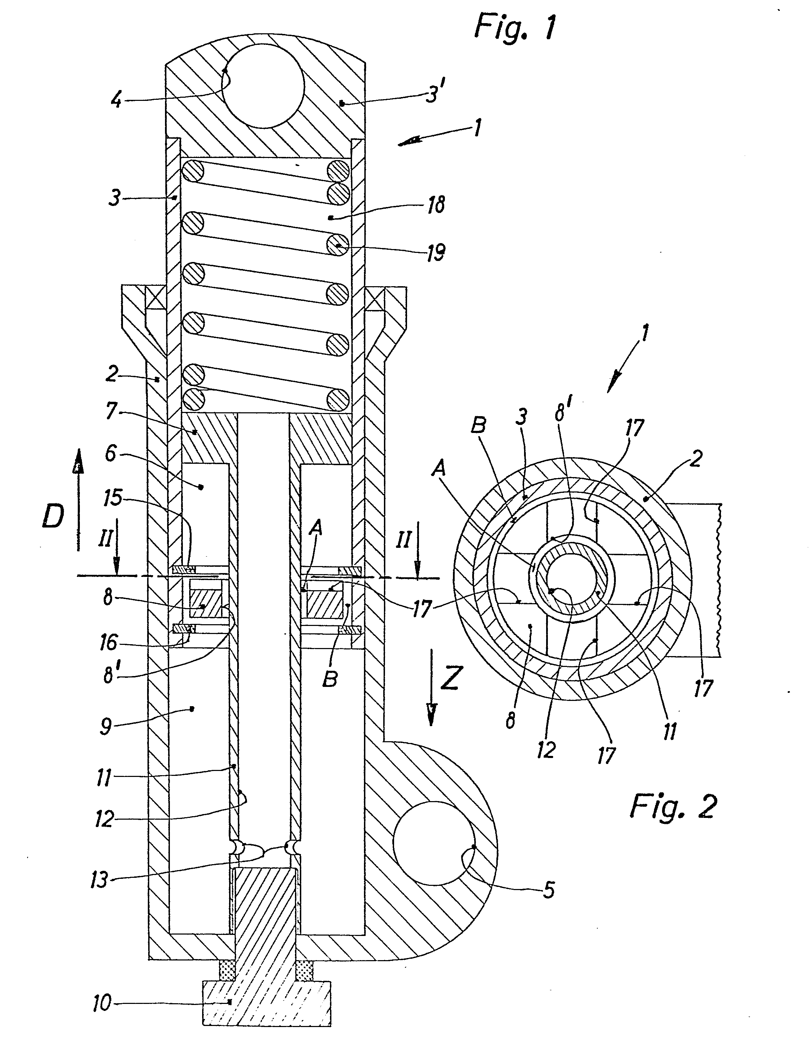

Wie in Fig. 1 ersichtlich, besteht der hydraulische, zum Einbau in die Gabel eines Motorrads vorgesehene Teleskopstoßdämpfer 1 aus einem äußeren Zylinder 2 und einem inneren Zylinder 3, der mit einer obenliegenden Befestigungsbohrung 4 versehen ist, während der äußere Zylinder 2 eine untenliegende Befestigungsbohrung 5 aufweist. Der innere Zylinder 3 hat einen Arbeitsraum 6, der einerseits von einem Kolben 7 und andererseits von einem am unteren Endabschnitt des inneren Zylinders 3 vorgesehenen Dämpfungseinsatz 8 begrenzt ist. Die im Arbeitsraum 9 des äußeren Zylinders 2 angeordnete und mit diesem durch eine Schraube 10 verbundene Kolbenstange 11 des Kolbens 7 weist einen sich über ihre gesamte Länge erstreckenden Hohlraum 12 auf, in den am unteren Endabschnitt der Kolbenstange 11 vorgesehene Queröffnungen 13 einmünden. In einer Federkammer 18 des inneren Zylinders 3 ist eine sich einerseits an dessen Deckel 3' und andererseits am Kolben 7 abstützende Druckfeder 19 angeordnet, gegen deren Wirkung der äußere Zylinder 2 und der innere Zylinder 3 ineinanderschiebbar sind.

Der sich zwischen zwei starren, einer obenliegenden Anlageschulter 15 und einer untenliegenden Anlageschulter 16 befindende Dämpfungseinsatz 8 hat eine solche Dicke, daß er zwischen den Anlageschultern 15, 16 geringfügig axial verschiebbar ist. Ferner ist der Dämpfungseinsatz 8 mit einer zentrischen Bohrung 8' versehen, die so bemessen
ist, daß wenn der Dämpfungseinsatz 8 von der Kolbenstange
11 durchsetzt ist, zwischen ihr und deren Außenumfang ein
Ringspalt A mit definierter Breite gebildet wird; ferner
hat der Dämpfungseinsatz 8 einen solchen Durchmesser, daß
zwischen seinem Außenumfang und der benachbarten Wandung
des inneren Zylinders 3 ein Ringspalt B mit definierter
Breite besteht. Die Breite der Ringspalte A und B ist
durch Abstimmung zu ermitteln und derart zu bemessen, daß
der Teleskopstoßdämpfer 1 zum Erreichen eines guten Fahrkomforts weich einfedert und härter ausfedert. Die Anlageschultern 15 und 16 sind durch Federstahlringe gebildet,
die durch Eigenspannung in entsprechend ausgebildete, im
inneren Zylinder 3 vorgesehene Ringnuten eingesprengt
sind.

Der Dämpfungseinsatz 8 ist an seiner, dem Kolben 7 zugewandten Anlagefläche mit vier, als Nuten ausgebildete
Ausnehmungen 17 versehen, die durch den Mittelpunkt des
Dämpfungseinsatzes 8 verlaufen (Fig. 2). Zweckmäßigerweise
ist der scheibenförmig gestaltete Dämpfungseinsatz 8 aus
Kunststoff durch Spritzgießen gefertigt, wobei die Ausnehmungen 17 problemlos vorgesehen werden können; daneben
verursacht ein aus Kunststoff bestehender Dämpfungseinsatz
8 im Betriebseinsatz des Teleskopstoßdämpfers 1 kaum Klappergeräusche. Der Innendurchmesser der Anlageschultern 15,
16 ist kleiner als der Außendurchmesser des Dämpfungseinsatzes 8, so daß dieser in der Druck- und Zugstufe (Pfeilrichtung D und Z) des Teleskopstoßdämpfers 1 - wie im folgenden erläutert wird - an den Anlageschultern 15, 16
anliegt.

Anstelle der Ausnehmungen 17 kann der Dämpfungseinsatz 8
an seiner außenliegenden Umfangsfläche und/oder die obenliegende Anlageschulter 15 an ihrer innenliegenden Umfangsfläche mit einer oder mehreren Ausnehmungen versehen
sein. Bei an der außenliegenden Umfangsfläche des Dämpfungseinsatzes 8 vorgesehenen Ausnehmungen muß jedoch der
Innendurchmesser der untenliegenden Anlageschulter 16 so
bemessen sein, daß bei Auflage des Dämpfungseinsatzes 8
- koaxial zum inneren Zylinder 3 - auf der untenliegenden
Anlageschulter 16 diese den Grund der Ausnehmungen in radialer Richtung ausreichend überdeckt, so daß in der Zugstufe (Pfeilrichtung Z) das hierbei vom Arbeitsraum 6 des
inneren Zylinders 3 in den Arbeitsraum 9 des äußeren Zylinders 2 fließende Hydrauliköl nur über den zwischen der
Kolbenstange 8 und der zentrischen Bohrung 8' des Dämpfungseinsatzes 8 vorgesehenen Ringspalt A und nicht über
die Anlageschulter 16 und den Dämpfungseinsatz 8 strömen
kann.

Die Wirkungsweise des neuerungsgemäßen Teleskopstoßdämpfers 1 ist folgende:

Überfährt ein mit dem neuerungsgemäßen Teleskopstoßdämpfer
1 ausgerüstetes Motorrad eine Fahrbahnerhöhung, so wird
der äußere, mit einem Rad des Motorrads in Verbindung stehende Zylinder 2 gegen die Wirkung der Druckfeder 19 in
Pfeilrichtung D über den inneren, am Fahrzeugaufbau angebrachten Zylinder 3 geschoben und damit in der Druckstufe
bewegt. Wenn der äußere Zylinder 2 nicht mehr durch Krafteinwirkung in Pfeilrichtung D bewegt wird, so wird er
durch die Wirkung der in der Druckstufe zusammengedrückten
Druckfeder 19 in Pfeilrichtung Z - da der innere Zylinder
3 am Fahrzeugaufbau befestigt ist - und damit in der Zugstufe verschoben.

Beim Verschieben des äußeren Zylinders 2 in Pfeilrichtung
D (Druckstufe), also beim Einfedern des Teleskopstoßdämpfers 1, beaufschlagt das sich im Arbeitsraum 9 des äußeren
Zylinders 2 befindende Hydrauliköl den Dämpfungseinsatz 8,

so daß dieser unter geringfügiger Axialverschiebung gegen die Anlagefläche der obenliegenden Anlageschulter 15 gedrückt wird; hierbei strömt das Hydrauliköl außer über den zwischen der Kolbenstange 11 und der zentrischen Bohrung 8' des Dämpfungseinsatzes 8 vorgesehenen Ringspalt A auch über den zwischen dem Außenumfang des Dämpfungseinsatzes 8 und der Wandung des inneren Zylinders 3 bestehenden Ringspalt B und von diesem über die vier Ausnehmungen 17 in den Arbeitsraum 6 des inneren Zylinders 3. Da somit in der Druckstufe (Pfeilrichtung D) des Teleskopstoßdämpfers 1 das Hydrauliköl über die beiden Ringspalte A und B in den Arbeitsraum 6 gelangt, hat hierbei der Teleskopstoßdämpfer 1 eine wesentlich weichere Dämpfung als in der Zugstufe (Verschiebung des äußeren Zylinders 2 in Pfeilrichtung Z), in der der Dämpfungseinsatz 8 vom Hydrauliköl des inneren Zylinders 6 - das durch die Wirkung der Druckfeder 19 ausgeschoben wird - gegen die untenliegende Anlageschulter 16 gedrückt wird, so daß das dabei in den Arbeitsraum 9 strömende Hydrauliköl lediglich den Ringspalt A passieren kann. Wenn das Hydrauliköl durch die Ringspalte A und B fließt, wird der Dämpfungseinsatz 8 durch das strömende Medium koaxial zur Kolbenstange 8 und zum inneren Zylinder 3 zentriert.

Nachdem der äußere Zylinder 2 und der innere Zylinder 3 unterschiedliche Durchmesser aufweisen, haben ihre Arbeitsräume 9 und 6 unterschiedliche Volumenänderungen in Bezug auf den Verschiebeweg. Daher wird das beim Ineinanderschieben der Zylinder 2 und 3 (Druckstufe-Pfeilrichtung D) sich im Arbeitsraum 9 mit dem größeren Innendurchmesser befindliche Hydrauliköl außer in den Arbeitsraum 6 auch über die in der Kolbenstange 11 vorgesehenen Queröffnungen 13 in den Hohlraum 12 der Kolbenstange 11 und von diesem in die Federkammer 18 des inneren Zylinders 3 eingespeist. Beim Auseinanderschieben der Zylinder 2 und 3 (Zugstufe-Pfeilrichtung Z) strömt das sich in der Federkammer 18 be-

- 7 -

findliche Hydrauliköl über den Hohlraum 12 der Kolbenstange 11, sowie den Queröffnungen 13, in den Arbeitsraum 9 des äußeren Zylinders 2 zurück.

- 1 -

Schutzansprüche:

1. Hydraulischer Teleskopstoßdämpfer für ein Kraftfahrzeug, insbesondere für ein Motorrad, mit zwei teleskopierbaren Zylindern, von denen der äußere Zylinder
   in seinem Arbeitsraum mit einer hohlen und mit Queröffnungen versehenen Kolbenstange versehen ist, an deren
   freiem Endabschnitt sich ein im Arbeitsraum des inneren
   Zylinders angeordneter Kolben befindet, wobei bei Relativverschiebungen der beiden Zylinder das sich in ihren
   Arbeitsräumen befindliche Hydrauliköl über einen im
   inneren Zylinder angeordneten Dämpfungseinsatz sowie
   den Hohlraum der Kolbenstange strömt, während der sich
   zwischen zwei starren Anlageschultern befindende und
   von der Kolbenstange unter Bildung eines Ringspalts
   durchsetzte Dämpfungseinsatz axial begrenzt verschiebbar ist, und die beiden Zylinder gegen die Wirkung
   einer in einer Federkammer des inneren Zylinders angeordneten Druckfeder ineinanderschiebbar sind, dadurch
   gekennzeichnet, daß die dem Kolben (7) zugewandte Anlageschulter (15) und/oder der Dämpfungseinsatz (8) an
   der Anlagefläche der beiden Teile oder an deren innen-
   bzw. außenliegenden Umfangsfläche mit wenigstens einer
   Ausnehmung (17) versehen ist.

2. Hydraulischer Teleskopstoßdämpfer nach Anspruch 1, dadurch gekennzeichnet, daß der Dämpfungseinsatz (8) an seiner dem Kolben (7) zugewandten Anlagefläche mit mehreren Ausnehmungen (17) versehen ist.

3. Hydraulischer Teleskopstoßdämpfer nach Anspruch 2, dadurch gekennzeichnet, daß der Dämpfungseinsatz (8) mit vier, als Nuten ausgebildete Ausnehmungen (17) versehen ist, die durch den Mittelpunkt des Dämpfungseinsatzes verlaufen.

4. Hydraulischer Teleskopstoßdämpfer nach Anspruch 1, dadurch gekennzeichnet, daß der Dämpfungseinsatz (8) aus Kunststoff besteht.

5. Hydraulischer Teleskopstoßdämpfer nach Anspruch 1, dadurch gekennzeichnet, daß der von der Kolbenstange (11) unter Bildung eines Ringspalts (A) durchsetzte Dämpfungseinsatz (8) auch in Bezug zur Wandung des inneren Zylinders (3) einen Ringspalt (B) hat.

Fig. 1

Fig. 2

0066299

Europäisches
Patentamt

**EUROPÄISCHER RECHERCHENBERICHT**

Nummer der Anmeldung

EP 82 10 4839

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D | US-A-3 810 659 (MARCIL)<br><br>--- | | B 62 K 25/06<br>F 16 F 9/50<br>F 16 F 9/34 |
| X | US-A-3 912 054 (FABRE)<br>* Insgesamt *<br><br>--- | 1-3,5 | |
| A | DE-A-3 026 833 (MARZOCCHI)<br>* Seite 10, Absatz 5 - Seite 11, Absatz 1; Figuren 1-7 *<br><br>--- | 1,5 | |
| A | DE-A-2 853 914 (FICHTEL & SACHS)<br>* Seite 8, Absatz 3 - Seite 9, Absatz 1; Seite 9, Absatz 3; Figuren 4,5 *<br><br>--- | 1,2,4 | |
| A | DE-A-2 841 354 (BMW)<br><br>--- | | |
| A | DE-A-2 757 711 (BMW)<br><br>--- | | **RECHERCHIERTE SACHGEBIETE (Int. Cl. 3)**<br><br>F 16 F<br>B 60 G<br>B 62 K |
| A | DE-A-2 742 701 (KAYABAKOGYOKABUSHIKIKAISHA)<br><br>--- | | |
| A | US-A-4 050 684 (SANDERS)<br><br>----- | | |

Der vorliegende Recherchenbericht wurde für alle Patentansprüche erstellt.

| Recherchenort | Abschlußdatum der Recherche | Prüfer |
|---|---|---|
| DEN HAAG | 09-09-1982 | ESPEEL R.P. |